Europäisches Patentamt

European Patent Office

Office européen des brevets

(19)

(11) Numéro de publication : **0 157 714 B1**

(12) **FASCICULE DE BREVET EUROPÉEN**

(45) Date de publication du fascicule du brevet :
26.04.89

(51) Int. Cl.⁴ : **A 01 K 89/01**, A 01 K 89/02

(21) Numéro de dépôt : **85420057.3**

(22) Date de dépôt : **25.03.85**

(54) Frein pour moulinet de pêche au lancer.

(30) Priorité : 26.03.84 FR 8405419

(43) Date de publication de la demande :
09.10.85 Bulletin 85/41

(45) Mention de la délivrance du brevet :
26.04.89 Bulletin 89/17

(84) Etats contractants désignés :
DE FR GB IT SE

(56) Documents cités :
CH—A— 386 765
DE—A— 1 657 104
DE—A— 2 630 144
FR—A— 970 757
FR—A— 1 130 332
FR—E— 77 644
GB—A— 470 695
US—A— 1 462 387
US—A— 2 624 523
US—A— 2 918 227
US—A— 2 932 464
US—A— 3 223 346

(73) Titulaire : **MITCHELL SPORTS**
**Av des Sorbiers Thyez**
**F-74300 Cluses (FR)**

(72) Inventeur : **Coquelet, André**
**Les Nénuphars Av Coppel Thyez**
**F-74300 Cluses (FR)**

(74) Mandataire : **de Beaumont, Michel**
**Cabinet Poncet 7, chemin de Tillier B.P. 317**
**F-74008 Annecy Cédex (FR)**

**Description**

La présente invention concerne les moulinets à lancer pour la pêche, et plus particulièrement ceux dits à bobine fixe, et munis d'un frein commandé depuis l'arrière du moulinet.

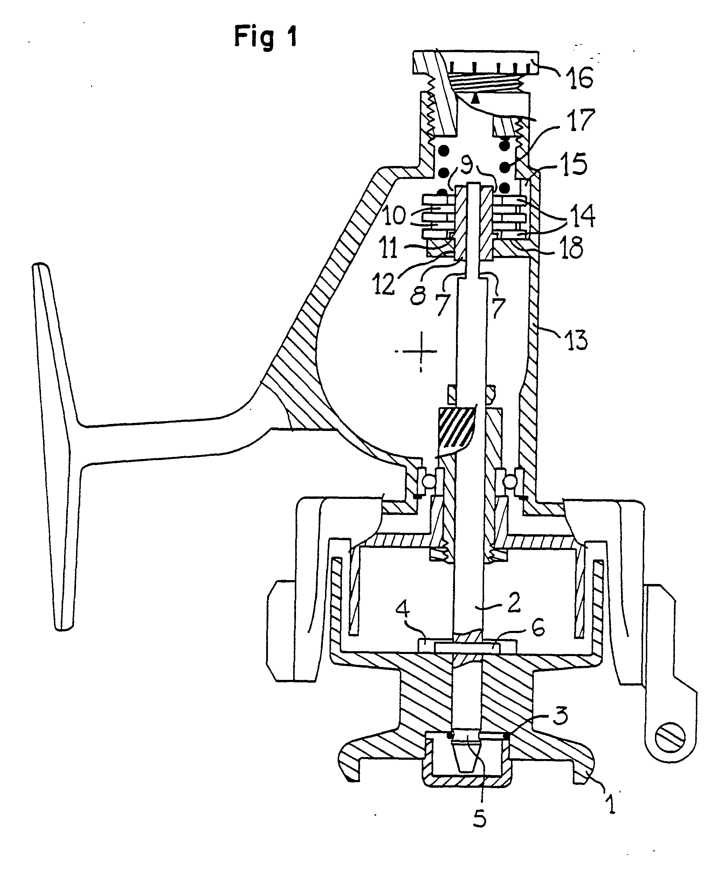

La figure 1 représente une vue en coupe d'un moulinet de ce type largement connu et utilisé. Dans ce moulinet, la réserve de fil appelée bobine ou tambour 1 est une pièce sensiblement de révolution constituée de deux flasques étendus radialement réunis par un moyeu cylindrique s'étendant axialement d'un flasque à l'autre. L'axe de la bobine est approximativement parallèle au sens de déroulement du fil. La bobine de fil est fixe en rotation tant pendant le lancer que pendant la récupération. Une manivelle entraine en rotation un récupérateur de fil qui tourne autour de la bobine et enroule le fil.

Dans le plus grand nombre des moulinets de ce type connu, la bobine cesse d'être fixe si la tension du fil excède une valeur limite choisie par le pêcheur. A cet effet, la bobine 1 est reliée au carter 13 du moulinet par l'intermédiaire d'une chaîne cinématique qui comporte au moins un dispositif limiteur d'effort, encore appelé frein. La bobine 1 est montée sur l'axe 2 par l'intermédiaire d'un clip 3 et d'une rainure 4 coopérant respectivement avec la gorge 5 et la goupille 6 de l'axe. L'axe a un mouvement de translation axial alternatif sous l'action d'un système de rangement du fil non représenté sur la figure. L'axe coulisse pour cela à son autre extrémité dans une douille 8 avec laquelle il est rendu solidaire en rotation par deux plats 7 de l'axe en engagement avec des plats correspondants intérieurs de la douille 8. La surface extérieure de la douille 8 comporte deux plats 9, et reçoit des rondelles 10 dont le trou central a une section correspondant à la section extérieure de la douille pour coulisser axialement sur elle sans possibilité de rotation. La douille comporte une collerette 11 en appui contre une partie formant butée 18 du carter 13 et une portée cylindrique 12 engagée dans un alésage de cette même partie 18 du carter pour centrage de la douille. Des rondelles 14, montées folles sur la douille, intercalées entre les rondelles 10, ont un prolongement radial qui s'engage dans une rainure 15 du carter pour interdire leur rotation. Les rondelles 10 et 14 ont des qualités de frottement appropriées. L'ensemble douille 8, rondelles 10 et rondelles 14 est comprimé axialement entre la partie formant butée 18 de carter et un premier ressort 17 repoussé par un écrou 16 de réglage du couple de freinage.

L'écrou 16 est accessible depuis l'arrière du moulinet, de sorte qu'il ne risque pas d'être confondu avec les moyens de changement de la bobine, généralement disposés à l'avant ; sa préhension est facilitée par sa dimension convenable, et elle n'est pas perturbée par la présence aléatoire du fil.

La limitation de la tension du fil au moyen du frein a répondu, dans un premier temps, au souci de ne pas casser le fil si le poisson est trop vigoureux pour être ramené en force et doit être fatigué avant mise à l'épuisette. Dans un second temps, les pêcheurs ont découvert la possibilité de capturer certains poissons qui attaquent le leurre très rapidement et le relachent s'ils sentent la moindre résistance, en choisissant une valeur très faible de la tension maximale du fil. Cependant, cette méthode conduit à des manipulations nombreuses qui sont source d'erreurs, car ensuite cette tension maximale doit être augmentée pour le ferrage, la fatigue, la récupération et la mise à l'épuisette du poisson. En outre, il est nécessaire d'augmenter cette valeur en certaines circonstances, par exemple pour se dégager d'un obstacle auquel le leurre s'est accroché.

Le brevet FR-E-77 644 ROUANET a divulgué un moulinet à frein principal commandé depuis le côté au moyen d'une vis sollicitant, par l'intermédiaire d'un ressort, un patin de frein portant contre la surface extérieure d'une douille solidaire en rotation de la bobine. Ce dispositif comprend en outre un frein auxiliaire, actionné par un levier dont une extrémité est manœuvrée par l'opérateur et l'autre extrémité est en appui sur le patin de frein principal.

Un tel dispositif assure les fonctions de frein auxiliaire, mais présente des inconvénients majeurs qui ont empêché son développement commercial : ainsi, le levier de frein auxiliaire a une course pratiquement nulle, ce qui rend très difficile le réglage du couple de freinage, surtout dans le domaine de la pêche où les réactions doivent être rapides et précises ; par ailleurs aucun moyen ne limite le couple de freinage auxiliaire, et l'on a pu constater que l'utilisation d'un tel dispositif conduit à des ruptures de fil fréquentes ; en outre le déséquilibre du levier produit, par l'effet de son poids, des freinages parasites dépendant de l'orientation du moulinet. On remarque que cette structure de frein auxiliaire n'est pas directement applicable à un frein principal du type à rondelles.

Le brevet US-A-3 223 346 décrit un moulinet à frein de récupérateur. Le récupérateur est monté sur un axe pouvant tourner dans le boitier du moulinet et étant solidaire en rotation d'un disque de freinage contre lequel vient porter un levier sollicité par une tige de manœuvre. La tige de manœuvre est sollicitée par un ressort de rappel, et comporte une butée réglable définissant un seuil minimum de freinage. L'utilisateur peut augmenter le freinage en appuyant sur la tige. La liaison entre la tige et le disque de freinage est une liaison articulée rigide, non élastique. Il en résulte que la course de la tige de freinage est pratiquement nulle, sa position au repos dépend de la butée réglable, et aucun moyen n'est prévu pour limiter le couple de freinage auxiliaire.

Le brevet GB-A-470 695 décrit un moulinet de pêche dans lequel le réglage du frein principal s'effectue par l'avant du moulinet, au moyen d'une noix réglée par une vis et repoussant la bobine en appui contre un disque de freinage. Un freinage additionnel est réalisé au moyen d'un levier poussant le disque de freinage contre la bobine par l'intermédiaire d'une tige. La liaison entre le levier et le disque de freinage est également une liaison mécanique articulée rigide, non élastique, de sorte que la course de la tige de freinage est pratiquement nulle, et le couple de freinage additionnel n'est pas limité.

La présente invention a notamment pour objet la réalisation de moyens de freinage additionnel dans lesquels la course du levier soit non nulle et également indépendante du réglage du frein arrière. L'utilisateur arrive en effet beaucoup mieux à régler la valeur du freinage en réglant la position du levier plutôt que la force de pression exercée sur celui-ci par la main. Ces moyens sont actionnables par un levier à rappel élastique pour assurer une efficacité immédiate et simple.

L'invention permet également la réalisation de ces freinages additionnels à l'aide d'un nombre de pièces supplémentaires très réduit, notamment en utilisant certaines pièces du frein arrière selon une double fonction, et selon une structure compatible avec les moulinets à frein arrière du type à rondelles.

Selon un autre objet de l'invention, la position du levier est indépendante du réglage du frein arrière, et en particulier sa position au repos est toujours la même. Le pêcheur a ainsi la possibilité d'apprécier sensiblement le freinage additionnel qu'il provoque en repérant simplement l'effort qu'il exerce sur le levier. En outre, il est important que le freinage additionnel soit nul lorsque le levier n'est pas actionné.

Les moyens de freinage additionnel selon l'invention permettent en particulier de rendre le couple de freinage additionnel sensiblement proportionnel au seul déplacement du levier, et cela indépendamment du réglage du frein arrière et sur toute la plage usuelle de réglage de ce frein.

La rupture du fil est évitée selon l'invention en prévoyant des moyens limitant à tout instant le couple additionnel maximal de freinage fourni par le frein additionnel.

Pour atteindre ces objets ainsi que d'autres, selon la présente invention dans un moulinet avec frein arrière du type connu comprenant un frein auxiliaire produisant un couple de freinage additionnel réglable appliqué sur la douille du frein arrière au moyen d'un organe de freinage sollicité par un levier de freinage auxiliaire comportant une partie préhensible accessible par l'utilisateur ; un moyen de transmission élastique est interposé directement entre la partie préhensible du levier de freinage auxiliaire et l'organe de freinage, pour transmettre l'effort de freinage auxiliaire ; le levier de freinage auxiliaire est sollicité par des moyens de rappel élastiques le ramenant en permanence en position de repos, une seconde butée fixe du carter limite la course maximale du levier de freinage auxiliaire ; de cette façon, grâce à l'agencement et aux raideurs respectives du moyen de transmission élastique et du moyen de rappel élastique, la position au repos du levier de freinage auxiliaire est constante, l'influence du poids du levier est inhibée, la course du levier est non nulle, la valeur maximale du couple de freinage additionnel est limitée, et la raideur du levier de freinage auxiliaire est pratiquement indépendante du réglage du frein principal.

Selon une autre caractéristique de l'invention, le levier est monté oscillant entre une première butée fixe du carter contre laquelle il est rappelé par les moyens de rappel élastique, et la seconde butée fixe du carter limitant sa course maximale ; la combinaison de la seconde butée fixe et du moyen de transmission élastique limite de manière plus précise l'effort de compression produit par le levier sur l'organe de freinage, et interdit la production d'un couple de freinage additionnel trop élevé, qui entraînerait la rupture du fil.

D'autres objets, caractéristiques et avantages de la présente invention, ressortiront de la description suivante de modes de réalisation particuliers, faite en relation avec les figures jointes, parmi lesquelles :

— la figure 1  illustre un moulinet connu à frein arrière ;

— la figure 2  représente une coupe longitudinale d'un moulinet selon la présente invention ; et

— la figure 3  représente une vue en coupe transversale selon l'axe I-I de la figure 2.

Dans la description qui suit, les éléments homologues à ceux du moulinet connu de la figure 1 ont été repérés par les mêmes références.

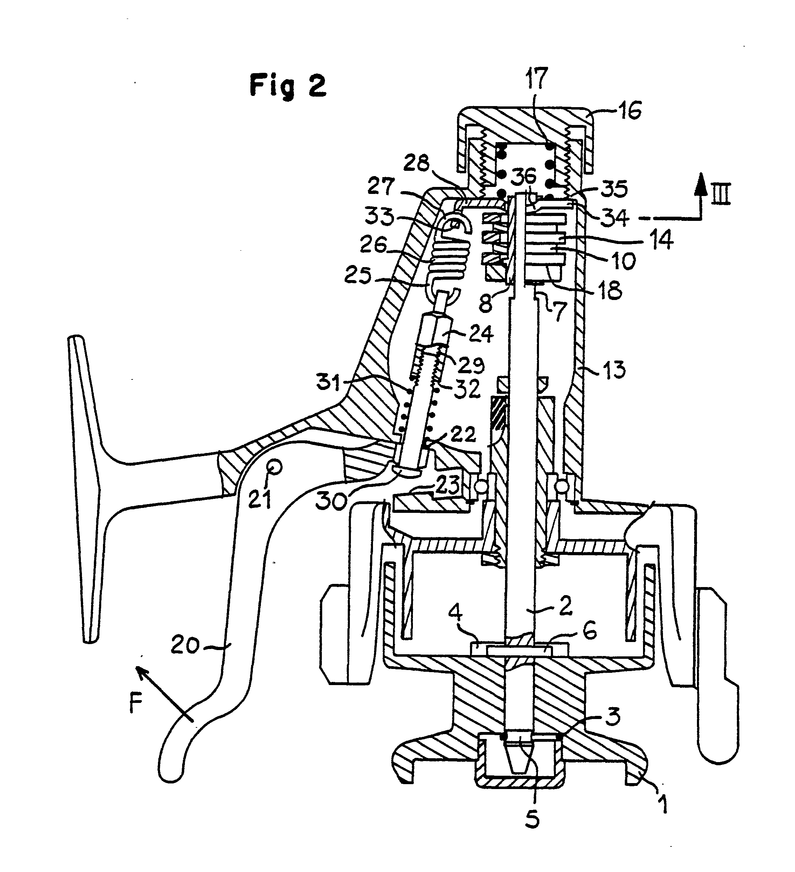

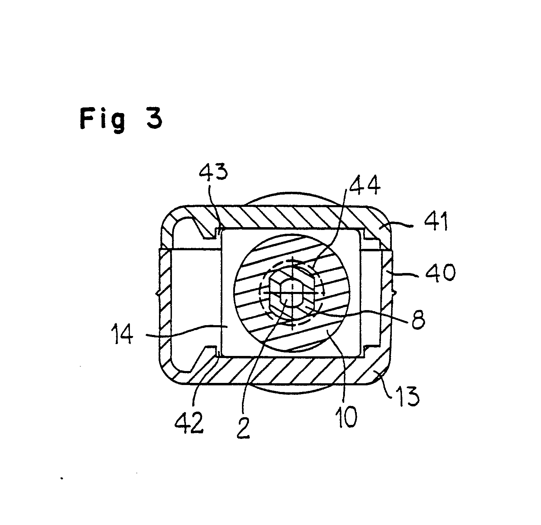

Dans le moulinet selon la présente invention, représenté sur les figures 2 et 3, le frein arrière a exactement la même constitution que dans les dispositifs connus de la figure 1.

Le moulinet selon l'invention comprend un levier de freinage auxiliaire 20, articulé sur le carter 13 selon un axe de rotation transversal 21. Le levier est disposé en position longitudinale sensiblement parallèle à la canne sur laquelle doit être monté le moulinet, de façon à être manœuvré directement par la main tenant la canne.

Le levier 20 peut osciller entre une première butée fixe 22 du carter 13 et une seconde butée fixe 23 du carter. Un tirant 24 transmet les mouvements du levier 20 à la première extrémité 25 d'un second ressort 26, ressort de traction, dont la seconde extrémité 27 est accrochée à un basculeur 28.

Le tirant 24 comprend une partie taraudée 29 dans laquelle s'engage une vis filetée 30, permettant son réglage en longueur. Un troisième ressort 31, ressort de compression, a une première extrémité portant contre un épaulement 32 du tirant 24 et une seconde extrémité portant contre le carter 13. Le troisième ressort 31 exerce sur le levier 20, en addition avec l'effet du second ressort 26, une force de rappel vers la première butée fixe 22 de carter, position dans laquelle le levier est au repos et le ressort 26 a une tension nulle. En outre, le troisième ressort 31 améliore sensiblement l'effet sensitif perçu par l'utilisateur lors de

la manœuvre du levier : on constate en effet que, en l'absence d'un troisième ressort 31, pour produire le freinage additionnel désiré, il suffit d'une force de traction faible du ressort 26, correspondant à une force d'appui F de 50 à 100 Newton environ à l'extrémité du levier. Le ressort 31 est choisi de façon à présenter une précontrainte, ou tension résiduelle non nulle dans la position de repos du levier 20, et une raideur telle qu'il faut appliquer à l'extrémité du levier une force croissante de 40 Newton environ à 150 Newton environ pour le faire passer de la position de repos au freinage maximal. Ainsi, l'utilisateur se sent sécurisé et on évite des variations trop brusques de freinage grâce au seuil minimal nécessaire et à l'augmentation sensible de la force que doit exercer l'utilisateur pour la manœuvre du levier. Par actionnement du levier 20, on produit une force de traction sur le basculeur 28, force de traction transmise par le tirant 24 et le ressort 26. En fin de course, lorsque le levier 20 vient porter contre la seconde butée 23, la force de traction exercée sur le basculeur 28 est maximale, et est déterminée par le second ressort 26.

Le basculeur 28 comprend une première extrémité 33 sur laquelle s'accroche le ressort 26, et une seconde extrémité 34 s'articulant dans le carter 13. Le basculeur 28 peut osciller autour de sa seconde extrémité 34 par actionnement du levier.

Dans le mode de réalisation représenté sur les figures, la seconde extrémité 34 du basculeur est en appui unidirectionnel sur un épaulement 35 du carter.

Le basculeur 28 comprend une partie centrale saillante 36 au contact de l'empilage des rondelles 10 et 14, et pouvant repousser les rondelles contre la butée 18 du carter, sous l'action d'un ou des deux ressorts 17 et 26.

Le basculeur 28 peut avoir la forme d'une rondelle, c'est-à-dire avec une lumière centrale permettant le libre passage de la douille 8. Selon une première possibilité, la lumière centrale est suffisamment grande pour laisser également le passage du ressort 17 qui vient en appui soit directement, soit par l'intermédiaire d'un poussoir non représenté contre la première rondelle de l'empilage des rondelles 10 et 14 ; selon une autre possibilité de l'invention, la lumière centrale est plus étroite, de sorte que le ressort 17 ou son poussoir est en appui contre le basculeur 28, lui-même en appui contre l'empilage de rondelles. Le basculeur 28, alors inséré entre le ressort 17 et l'empilage de rondelles, transmet la pression exercée par le ressort 17 du frein arrière.

Le fonctionnement du dispositif est le suivant : en position de repos du levier 20, c'est-à-dire en appui contre la butée 22 sous l'action du ressort 31, l'effort transmis par le second ressort 26 sur le basculeur 28 est nul. Le seul couple de freinage est produit par le frein arrière, c'est-à-dire par le réglage de l'écrou 16 comprimant le ressort 17 qui lui-même comprime l'empilage des rondelles 10 et 14.

Lorsque le frein arrière produit un couple de freinage déterminé, le levier 20 peut produire un couple de freinage additionnel : par actionnement du levier, le tirant 24 provoque la tension du ressort 26 qui transmet une traction sur le basculeur 28 lui-même provoquant une augmentation de la compression de l'empilage des rondelles 10 et 14. L'effet exercé par le levier 20 est limité par la combinaison de la butée 23 et du ressort 26. Dans la plus grande partie de la zone de fonctionnement du frein arrière, le couple de freinage additionnel est sensiblement proportionnel au déplacement angulaire du levier 20.

On remarque sur la figure 3 que le carter 13 comprend deux parties, une première partie 40 sur laquelle vient s'emboîter une seconde partie 41 formant couvercle. Les rondelles 10, rondelles rotatives, sont montées coulissantes sur la douille 8 par rapport à laquelle elles sont bloquées en rotation par des plats. Les rondelles 14, ou rondelles fixes, tourillonnent librement en rotation et en translation par rapport à la douille 8, et coulissent par rapport au carter 13 dans lequel elles sont bloquées en rotation par engagement dans des rainures correspondantes 42 et 43 du carter. Pour cela, les rondelles 14 ont une section sensiblement rectangulaire, mieux représentée sur la figure 3, et un trou central circulaire 44 de diamètre supérieur au diamètre extérieur de la douille 8. Les rondelles 10 ont par contre une section circulaire de diamètre extérieur inférieur à la distance séparant les fonds des rainures 42 et 43, et un trou central dont la section comporte des plats et correspond à la forme extérieure de la portion de la douille 8 sur laquelle elles sont engagées. Dans le mode de réalisation présenté sur la figure 3, chacune des deux parties 40 et 41 du carter 13 comporte l'une des deux rainures 42 et 43.

Les rondelles 10 et 14 peuvent être uniques ou multiples, et peuvent être séparées par des rondelles intermédiaires en une matière à coefficient de frottement convenable, telle que : cuir, polytetrafluoroethylène, amiante, feutre, etc...

La présente invention n'est pas limitée aux modes de réalisation qui ont été explicitement décrits, mais elle en inclut les diverses variantes et généralisations contenues dans le domaine des revendications ci-après.

## Revendications

1. Moulinet du type à bobine fixe (1) avec frein (16) accessible de l'arrière, comprenant un axe d'entraînement (2) dont une première extrémité porte la bobine (1), l'axe (2) et la bobine étant entraînés en mouvement de translation alternatif longitudinal pour répartir le fil sur la bobine, une douille (8) solidaire d'une surface de freinage (10) étant solidaire en rotation de la bobine et tourillonnant librement dans un logement du carter (13) de moulinet dans lequel elle est bloquée en translation axiale, un frein principal de bobine comprenant un organe de manœuvre actionnable de l'arrière du moulinet par l'utilisateur et poussant un organe de freinage (14) contre la surface de freinage (10) de la douille pour freiner sa rotation par rapport au carter (13), un levier (20) de freinage auxiliaire comportant une partie préhensible formant organe de manœuvre et permettant de pousser également dans le même sens l'organe de freinage pour freiner la rotation de la douille par rapport au carter (13), caractérisé en ce que :

— un moyen de transmission élastique (26) est interposé directement dans la chaîne d'éléments de transmission de l'effort de freinage auxiliaire (20, 24, 26, 28, 14), pour transmettre à l'organe de freinage (14) l'effort de freinage auxiliaire appliqué par l'utilisateur sur la partie préhensible (20) du levier de freinage auxiliaire,

— le levier de freinage auxiliaire (20) est sollicité par des moyens de rappel élastiques (31) le ramenant en permanence en position de repos,

— une seconde butée fixe (23) du carter limite la course maximale du levier de freinage auxiliaire (20), de sorte que, grâce à l'agencement et aux raideurs respectives du moyen de transmission élastique (26) et du moyen de rappel élastique (31), la position au repos du levier de freinage auxiliaire est constante, l'influence du poids du levier est inhibée, la course du levier est non nulle, la valeur maximale du couple de freinage additionnel est limitée, et la raideur du levier de freinage auxiliaire est pratiquement indépendante du réglage du frein principal.

2. Moulinet selon la revendication 1, caractérisé en ce que le levier (20) peut osciller entre une première butée fixe (22) du carter contre laquelle il est rappelé par les moyens de rappel élastiques (26, 31), et la seconde butée fixe (23) du carter limitant sa course maximale.

3. Moulinet selon l'une des revendications 1 ou 2, caractérisé en ce que le moyen de transmission élastique comprend un ressort (26) transmettant la tension produite par le levier (20), la tension étant nulle lorsque le levier est en appui contre la première butée (22) de carter, le ressort (26) participant au rappel élastique du levier.

4. Moulinet selon l'une quelconque des revendications 1 à 3, caractérisé en ce que le freinage principal est réalisé par compression axiale d'un empilage de rondelles (10, 14) dont au moins une rondelle (10) est rotative, montée coulissante et solidaire en rotation sur la douille (8), et dont au moins une rondelle (14) est non rotative, montée coulissante et solidaire en rotation du carter, l'empilage de rondelles étant inséré entre une butée (18) du carter et un premier ressort (17) dont la compression est réglée par un écrou fileté (16) de réglage axial muni de moyens de repérage, le levier de freinage auxiliaire (20) agissant sur la première extrémité (33) d'un basculeur (28) dont la seconde extrêmité (34) s'articule dans le carter (13) et dont la partie centrale (36) agit sur l'empilage de rondelles et est susceptible, par actionnement du levier (20), de repousser l'empilage de rondelles contre la butée (26) dans le même sens que le premier ressort (17).

5. Moulinet selon la revendication 4, caractérisé en ce que le moyen de transmission élastique (26) est inséré entre le levier de freinage auxiliaire (20) et le basculeur (28).

6. Moulinet selon la revendication 5, caractérisé en ce qu'il comprend un troisième ressort (31) pour participer au rappel élastique du levier (20) et modifier l'effet sensitif du levier, le troisième ressort exerçant sur le levier une force de rappel tendant à le ramener dans sa position de repos, et présentant une précontrainte lorsque le levier est au repos.

7. Moulinet selon la revendication 5, caractérisé en ce que le basculeur (28) a une forme générale en rondelle, avec une lumière centrale dont le diamètre est suffisant pour permettre le libre passage, d'une part, de la douille (8) et, d'autre part, du premier ressort (17) ou d'un poussoir, de sorte que le premier ressort (17) vient en appui soit directement, soit par l'intermédiaire du poussoir contre la première rondelle de l'empilage de rondelles (10, 14).

8. Moulinet selon la revendication 5, caractérisé en ce que le basculeur (28) a une forme générale en rondelle, avec une lumière centrale dont le diamètre est suffisant pour permettre le libre passage de la douille (8), le premier ressort (17) venant en appui sur le basculeur (28) soit directement, soit par l'intermédiaire d'un poussoir.

9. Moulinet selon l'une quelconque des revendications 1 à 8, caractérisé en ce que le mouvement du levier (20) est transmis au second ressort (26) par l'intermédiaire d'un tirant (24) comportant une partie taraudée (29) dans laquelle s'engage une vis (30) permettant le réglage en longueur du tirant.

**Claims**

1. A reel of the fixed spool (1) type with rear brake (16), comprising a drive shaft (2) a first end of which supports the spool (1), the shaft (2) and the spool being driven with a longitudinal reciprocating translational movement so as to distribute the line on the spool, a sleeve (8) integral with a braking surface (10) being locked for rotation with the spool and rotating freely in a cavity of the reel housing (13) in which it is secured against axial translation, a main spool brake comprising an operating member actuatable from the rear of the reel by the user and pushing a braking member (14) against the braking surface (10) of said sleeve for braking rotation thereof with respect to said housing (13), an auxiliary braking lever (20) comprising a grippable part forming a control member for also pushing the braking member in the same direction for braking rotation of the sleeve with respect to the housing (13), characterised in that :

— a resilient transmission means (26) is inserted directly in the series of means transmitting the auxiliary braking force (20, 24, 26, 28, 14) for transmitting to the braking member (14) the auxiliary braking force applied by the user to the grippable part (20) of the auxiliary braking lever,

— the auxiliary braking lever (20) is urged by resilient return means (31) bringing it permanently back to the rest position,

— a second fixed stop (23) of the housing limits the maximum travel of the auxiliary braking lever (20), so that, due to the positions and to the respective stiffnesses of the resilient transmission means (26) and of the resilient return means (31), the rest position of the auxiliary braking lever is constant, the influence of the weight of the lever is inhibited, the range of travel of the lever is non zero, the maximum value of the additional braking torque is limited and the stiffness of the auxiliary braking lever is practically independent of the setting of the main brake.

2. The reel as claimed in claim 1, characterised in that said lever (20) may rock between a first fixed stop (22) of the housing against which it is returned by said resilient return means (26, 31) and said second stop (23) of the housing limiting its maximum travel.

3. The reel as claimed in one of claims 1 or 2, characterised in that said resilient transmission means comprises a spring (26) transmitting the tension generated by the lever (20), said tension being zero when the lever is in abutment against the first stop (22) of the housing, said spring (26) participating in the resilient return of the lever.

4. The reel as claimed in anyone of claims 1 to 3, characterised in that main braking is provided by axial compression of a stack of washers (10, 14), one washer (10) at least of which is rotary, is mounted for sliding on and is locked for rotation with said sleeve (8), and one washer (14) at least of which is non rotary, mounted for sliding and locked for rotation with said housing, said stack of washers being inserted between a stop (18) of the housing and a first spring (17) whose compression is adjusted by a threaded axial adjustment nut (16) having graduation means, said auxiliary braking lever (20) acting on the first end (33) of a rocking lever (28) whose second end (34) is pivotably linked to said housing (13) and whose central part (36) acts on the stack of washers and is capable, through actuation of the lever (20), of pushing the stack of washers back against the stop (26) in the same direction as said first spring (17).

5. The reel as claimed in claim 4, characterised in that said resilient transmission means (26) is inserted between the auxiliary braking lever (20) and said rocking lever (28).

6. The reel as claimed in claim 5, characterised in that it comprises a third spring (31) for participating in the resilient return of said lever (20) and for modifying the sensory effect of the lever, said third spring exerting on said lever a return force tending to bring it back to its rest position, and having a prestress when the lever is at rest.

7. The reel as claimed in claim 5, characterised in that said rocking lever (28) has the general shape of a washer, with a central aperture whose diameter is sufficient for allowing said sleeve (8) on the one hand and said first spring (17) or a pusher on the other hand to pass freely therethrough so that said first spring (17) comes into abutment directly, or through the pusher, against the first washer of the stack of washers (10, 14).

8. The reel as claimed in claim 5, characterised in that said rocking lever (28) has the general shape of a washer, with a central aperture whose diameter is sufficient for allowing said sleeve (8) to pass freely therethrough, said first spring (17) coming into abutment against said rocking lever (28) either directly or through a pusher.

9. The reel as claimed in any of claims 1 to 8, characterised in that the movement of said lever (20) is transmitted to the second spring (26) through a connecting rod (24) comprising an internally threaded portion (29) in which is engaged a screw (30) for adjusting the connecting rod in length.

**Patentansprüche**

1. Angelwinde mit fester Spule (1) mit einer von hinten zugänglichen Bremse (16), umfassend eine Mitnahmeachse (2), deren erstes Ende die Spule (1) trägt, wobei die Achse (2) und die Spule in einer alternativen longitudinalen Translationsbewegung mitgenommen werden, um die Leine über die Spule zu winden, und eine mit einer Bremsfläche (10) verbundene Hülse (8), die in einer Rotationsbewegung mit der Spule verbunden ist und die frei drehbar in einer Aufnahme des Gehäuses (13) der Angelwinde gelagert ist, in welcher sie gegen eine axiale Translationsbewegung gesichert ist, und einer Hauptbremse der Spule, die ein durch den Benutzer von der Rückseite der Angelwinde betätigbares Handhabungsorgan aufweist, und die ein Bremsorgan (14) gegen die Bremsfläche (10) der Hülse drückt, um ihre Rotation relativ zu dem Gehäuse (13) abzubremsen, und einen Hilfsbremshebel (20), der ein Handhabungsorgan bildendes greifbares Teil aufweist, welches das Andrücken des Bremsorgans auch in derselben Richtung zuläßt, um die Rotation der Hülse relativ zum Gehäuse (13) abzubremsen, dadurch gekennzeichnet, daß eine elastische Übertragungseinrichtung (26) direkt in einer Kette von Elementen zum Übertragen der Hilfsbremskraft der Hilfsbremse (20, 24, 26, 28, 14) zwischengelagert ist, um die durch den Benutzer auf das greifbare Teil (20) des Hilfsbremshebels aufgebrachte Hilfsbremskraft auf das Bremsorgan (14) zu übertragen, der Hilfsbremshebel (20) durch elastische Rücksetzeinrichtungen (31) beansprucht wird, die ihn ständig in einer Ruhestellung zurücksetzen, ein zweiter fester Anschlag (23) des Gehäuses den maximalen Weg des Hilfsbremshebels (20) in der Weise begrenzt, daß durch die Anordnung und die entsprechende Steifigkeit der elastischen Übertragungseinrichtung (26) und der elastischen Rücksetzungseinrichtung (31), die Ruhestellung des Hilfsbremshebels konstant ist, der Einfluß des Gewichts des Hebels gehemmt ist, der Weg des Hebels nicht verschwindet, der maximale Wert des Drehmoments des zusätzlichen Bremsens begrenzt ist, und daß die Steifigkeit des Hilfsbremshebels praktisch unabhängig von der Einstellung der Hauptbremse ist.

2. Angelwinde nach Anspruch 1, dadurch gekennzeichnet, daß der Hebel (20) zwischen einem ersten festen Anschlag (22) des Gehäuses gegen den er durch die elastischen Rücksetzeinrichtungen (26, 31) zurückgestellt ist und dem zweiten festen Anschlag (23) des Gehäuses, der seinen maximalen Weg begrenzt, schwenken kann.

3. Angelwinde nach einem der Ansprüche 1 oder 2, dadurch gekennzeichnet, daß die elastische Übertragungseinrichtung eine Feder (26) aufweist, die die durch den Hebel erzeugte Spannung überträgt, wobei die Spannung verschwindet, wenn der (20) Hebel sich gegen den ersten Anschlag (22) des Gehäuses abstützt, wobei die Feder (26) an der elastischen Rückstellung des Hebels beteiligt ist.

4. Angelwinde nach einem der Ansprüche 1 bis 3, dadurch gekennzeichnet, daß die Hauptbremswirkung durch eine Axialkompression eines Stapels von Scheiben (10, 14) zustandekommt, von denen mindestens eine Scheibe (10) drehbar ist, und gleitfähig gelagert ist und in Rotation mit der Hülse (8) drehbar montiert ist und von denen mindestens eine Scheibe (14) nicht drehbar ist, und gleitfähig gelagert und in Rotation mit dem Gehäuse verbunden ist, wobei der Stapel der Scheiben zwischen einem Anschlag (18) des Gehäuses und einer ersten Feder (17) eingefügt ist, deren Kompression durch eine für eine axiale Verstellung ausgebildete Schraubenmutter (16) eingestellt ist, die mit Einpasseinrichtungen versehen ist, und daß der Hilfsbremshebel (20) an einem ersten Ende (33) eines Kipphebels (28) angreift, dessen zweites Ende (34) sich in dem Gehäuse (13) gelenkig bewegt und dessen zentrales Teil (36) an dem Stapel der Scheiben angreift und durch Betätigung des Hebels (20) den Stapel der Scheiben in die gleiche Richtung wie die erste Feder (17) gegen den Anschlag (26) zurückdrücken kann.

5. Angelwinde nach Anspruch 4, dadurch gekennzeichnet, daß die elastische Übertragungseinrichtung (26) zwischen dem Hilfsbremshebel (20) und dem Kipphebel (28) angeordnet ist.

6. Angelwinde nach Anspruch 5, dadurch gekennzeichnet, daß sie eine dritte Feder (31) aufweist, um teilzunehmen an dem elastischen Zurücksetzen des Hebels (20) und die Empfindlichkeit des Hebels zu ändern, wobei die dritte Feder eine Rückstellkraft auf den Hebel ausübt, um ihn in Ruhestellung zurückzubringen und eine Vorspannung zeigt, wenn der Hebel in Ruhe ist.

7. Angelwinde nach Anspruch 5, dadurch gekennzeichnet, daß der Kipphebel (28) prinzipiell eine Scheibenform hat, mit einer zentralen Öffnung, deren Durchmesser genügt, um den freien Durchgang zu erlauben, einerseits der Hülse (8) und andererseits der ersten Feder (17) oder eines Drückers, so daß die erste Feder (17) sich entweder direkt oder durch Vermittlung des Drückers gegen die erste Scheibe des Stapels der Scheiben (10, 14) abstützt.

8. Angelwinde nach Anspruch 5, dadurch gekennzeichnet, daß der Kipphebel (28) prinzipiell eine Scheibenform hat, mit einer zentralen Öffnung, deren Durchmessr genügt, um den freien Durchgang der Hülse (8) zu erlauben, wobei die erste Feder (17) sich entweder direkt oder durch Vermittlung eines Drückers auf den Kipphebel (28) stützt.

9. Angelwinde nach einem der Ansprüche 1 bis 8, dadurch gekennzeichnet, daß die Bewegung des Hebels (20) auf die zweite Feder (26) übertragen wird durch Vermittlung einer Spannstange (24), die einen mit Gewinde versehenen Teil (29) aufweist, in welchem eine Schraube (30) eingreift, die eine Regelung der Länge der Spannstange zuläßt.

Fig 1

# Fig 2

## Fig 3